Europäisches Patentamt

European Patent Office

Office européen des brevets

(19)

(11) Veröffentlichungsnummer: **0 244 347 B1**

# (12) EUROPÄISCHE PATENTSCHRIFT

(45) Veröffentlichungstag der Patentschrift:
21.08.91 Patentblatt 91/34

(51) Int. Cl.⁵: **H04Q 1/14, H01R 9/24**

(21) Anmeldenummer: 87730032.7

(22) Anmeldetag: 03.04.87

(54) Anschlussleiste für Kabeladern, insbesondere von Fernsprechkabeln.

(30) Priorität: 30.04.86 DE 3614592

(43) Veröffentlichungstag der Anmeldung:
04.11.87 Patentblatt 87/45

(45) Bekanntmachung des Hinweises auf die
Patenterteilung:
21.08.91 Patentblatt 91/34

(84) Benannte Vertragsstaaten:
AT BE CH DE ES FR GB GR IT LI LU NL SE

(56) Entgegenhaltungen:
DE-A- 3 345 803
GB-A- 2 129 630
US-A- 4 541 682

(73) Patentinhaber: KRONE Aktiengesellschaft
Beeskowdamm 3-11
W-1000 Berlin 37 (DE)

(72) Erfinder: Klaiber, Eberhard
Hauptstrasse 134
W-1000 Berlin 62 (DE)

EP 0 244 347 B1

**Beschreibung**

Die Erfindung bezieht sich auf eine Anschlußleiste für Kabeladern, insbesondere von Fernsprechkabeln, gemäß dem Oberbegriff des Anspruches 1.

Eine Anschlußleiste der gattungsgemäßen Art ist aus der DE-OS 34 15 369 vorbekannt. Diese dient zum gleichzeitigen Anschließen von dicken Dropwire-Kabeladern und dünnen Kabeladern an einem Anschlußelemnt. Dabei sind die dicke Dropwire-Kabelader und die weitere dünne Kabelader gleichzeitig an einem einzigen. Anschlußkontakt angeschlossen, welcher einen Kontaktschlitz mit unterschiedlicher Schlitzweite für Kabeladern unterschiedlicher Aderdurchmesser aufweist. Die Mittelkontakte der Anschlußleiste dienen zum Anschließen eines Überspannungsableitermagazines.

Nachteilig hierbei ist, daß die beiden gemeinsam an einem Anschlußkontakt angeschlossenen Kabeladern nicht voneinander getrennt werden können, ohne daß die Kontaktverbindung zwischen der einen Kabelader und dem Anschlußkontakt gelöst wird.

Da dieser üblicherweise ein Schneid-/Klemm-Kontakt ist, muß die Kabelader zum Lösen vom Anschlußkontakt abgeschnitten werden.

Der Erfindung liegt von daher die Aufgabe zugrunde, eine Anschlußleiste für Kabeladern, insbesondere von Fernsprechkabeln, der gattungsgemäßen Art zu schaffen, bei welcher die Möglichkeit besteht, die beiden an einem Anschlußelement angeschlossenen Kabeladern voneinander zu trennen, ohne die Kontaktverbindung zwischen einer der Kabeladern und dem zugehörigen Anschlußkontakt zu lösen.

Die Lösung dieser Aufgabe ergibt sich aus den kennzeichnenden Merkmalen des Anspruches 1. Erfindungsgemäß ist die eine Kabelader, insbesondere die Dropwire-Kabelader am Anschlußkontakt des in in die Anschlußleise fest eingebauten Anschlußelementes, hier insbesondere mittels einer Schneid-/Klemm-Kontaktierung,angeschlossen, wohingegen die andere Kabelader an das Kabelanschlußelement des Steckers angeschlossen ist, welcher mit seiner Kontaktfahne in den Mittelkontakt des Anschlußelementes eingesteckt ist. Durch Herausziehen des Steckers aus der Anschlußleiste kann somit leicht eine Trennung der elektrischen Verbindung zwischen beiden Kabeladern erfolgen, ohne daß die Kontaktverbindung jeder Kabelader mit ihrem zugehörigen Anschlußkontakt bzw. Kabelanschlußelement gelöst werden muß.

Ferner können beide Kabeladern unabhängig voneinander beschaltet werden.

Die erfindungsgemäße Anschlußleiste kann insbesondere dort eingesetzt werden, wo innerhalb eines Fernsprech-Kabelnetzes nicht nur standardisierte Fernsprechkabel mit dünnen Kabeladern verlegt sind, sondern auch spezielle Dropwire-Kabel (Freiluftkabel) mit erheblich dickeren Kabeladern. Diese besitzen eine extrem starke Ummantelung zur Isolation. Eine Verbindungsstelle zwischen einem Dropwire-Kabel und einem standardisierten Fernsprechkabel besteht dort, wo ein Übergang von einem Dropwire-Kabel auf ein standardisiertes Fernsprechkabel benötigt wird, z.B. an einem Hausanschluß innerhalb eines Endverzweigers.

Weitere vorteilhafte Ausgestaltungen der Erfindung ergeben sich aus den Unteransprüchen. Hingewiesen wird insbesondere auf die Möglichkeit, die Stecker entweder mit Schraubklemmen oder mit Schneid-/Klemm-Kontakten zu versehen, so daß wahlweise ein Anschluß unter Verwendung eines Schraubenziehers oder unter Verwendung eines speziellen Anschlußwerkzeug oder einfach durch Schließen des Gehäusedeckels ohne Werkzeug hergestellt werden kann. Die Erfindung sieht ferner noch die Möglichkeit der Integration von Überspannungsableitern in die Anschlußleiste vor.

Die Erfindung ist nachfolgend anhand eines in den Zeichnungen dargestellten Ausführungsbeispieles näher erläutert.

Es zeigen :

Fig.1  eine Perspektivansicht der Anschlußleiste mit einem nach oben herausgezogenen Stecker und nach unten herausgezogenem Aschlußelement und Erdkontakt,

Fig.2  eine Perspektivansicht eines Steckers in einer alternativen Ausführungsform,

Fig.3  die Draufsicht auf einen geöffneten Endverzweiger mit eingebauter Anschlußleiste und

Fig.4  einen Querschnitt gemäß der Linie IV-IV in Fig.3 durch den geschlossenen Endverzweiger.

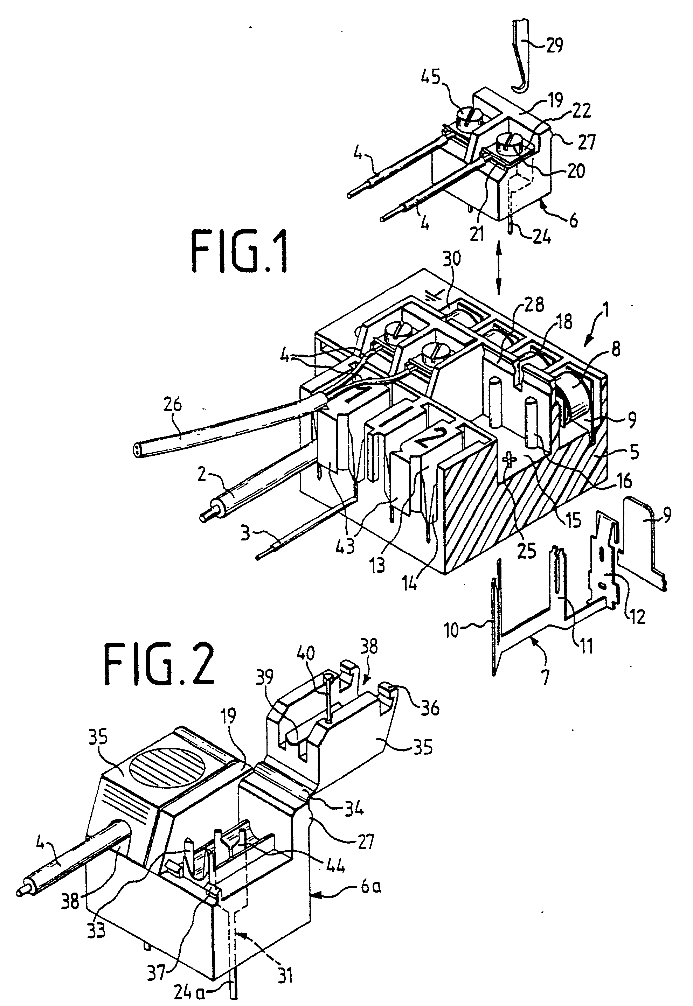

Die in Fig.1 in einer geschnittenen Perspektivdarstellung gezeigte Anschlußleiste 1, für Kabeladern 2, 3 und 4 besteht aus einem Kunststoffkörper 5, mehreren in diesen von oben eingesetzten Steckern 6, mehreren von unten eingesetzten Anschlußelementen 7 und diesen zugeordneten Überspannungsableitern 8 sowie einer Erdschiene 9.

Jedes Anschlußelement 7 besitzt einen Anschlußkontakt 10 für eine Kabelader 2,3, einen Mittelkontakt 11 zur Verbindung mit einer Kabelader 4 sowie eine Kontaktfeder 12 zur Kontaktierung eines Überspannungsableiters 8. Für jeden Anschlußkontakt 10 ist auf der Vorderseite des Kunststoffkörpers 5 der Anschlußleiste 1 eine Aufnahmeöffnung 13 ausgespart, welche auf der Vorderseite mit einem Klemmschlitz 14 zum Einklemmen der Isolations-Umhüllung der Kabeladern 2,3 versehen ist. Der Klemmschlitz 14 verjüngt sich nach unten hin, um so Kabeladern 2,3 unterschiedlicher dicker Isolations-Umhüllungen sicher klemmen zu können. Auch die Schlitzweite des Anschlußkontaktes 10 selbst verjüngt sich nach unten hin, um so unterschiedlich dicke Kabeladern 2,3 sicher einklemmen zu können. Bei/den Anschlußkontakten 10 handelt es sich um Schneid-Klemmkontakte, die unter einen Winkel von 45° in die Aufnahmeöffnung 13 eingeführten Kabeladern 2,3 stehen.

Etwa in der Längsmitte des Kunststoffkörpers 5 sind mehrere Aufnahmekammern 15 für die Stecker 6 vorgesehen. Die Stecker 6 bestehen aus im Querschnitt rechteckigen Kunststoffkörpern, an deren Abmessungen die Aufnahmekammern 15 angepaßt sind. An der in der Fig.1 dargestellten rückwärtigen Wand der Aufnahmekammer 15 sind zwei sich senkrecht zum Boden der Aufnahmekammer 15 erstreckende Rippen 16 ausgeformt, die in entsprechende, nicht dargestellte Nuten der Stecker 6 eingreifen. Diese bewirken eine Führung der Stecker 6 beim Einführen in die Aufnahmekammern 15 und bilden gleichzeitig einen Verdrehschutz bei der Montage. Die Aufnahmekammern 15 für die Stecker 6 sind durch Trennwände voneinander getrennt. In der Rückwand einer jeden Aufnahmekammer 15 sind zwischen den rippen 16 noch Schlitze 18 eingelassen, deren Zweck später noch erläutert werden wird.

Jeder Stecker 6 besteht aus Kunststoff und weist auf seiner Oberseite T-förmig angeordnete Stege 19 auf, wie es in Fig. 1 besonders dargestellt ist. In den somit unterteilten Oberseiten eines jeden Steckers 6 sind Schraubklemmen 45 angeordnet, welche jeweils aus zwei Metallplättchen 21,22 und einer Gewindeschraube 23 gebildet sind. Das obere Metallplättchen 22 ist mit einer metallischen Kontaktfahne 24 verbunden, die durch den Stecker 6 nach unten hindurchragt und - wie es in Fig.1 dargestellt ist -frei nach unten aus dem Stecker 6 herausragt. Die beiden Kontaktfahnen 24 eines jeden Steckers 6 kontaktieren beim Einstecken des Steckers 6 in seiner Aufnahmekammer 15 die Mittelkontakte 11 der zugehörigen Anschlußelemente 7.

Hierzu sind im Boden einer jeden Aufnahmekammer 15 Kreuz-Gabelöffnungen 25 vorgesehen, in welche von unten, d.h. innerhalb des Kunststoffkörpers 5 die Mittelkontakte 11 hineinragen und von oben die Kontaktfahnen 24 der Stecker 6 eingesteckt werden, wobei sich die Mittelkontakte 11 und die Kontaktfahnen 24 kreuzen.

Jeder Stecker 6 besitzt zwei Schraubklemmen 45 zum Anschluß jeweils einer Kabelader 4 eines Fernsprechkabels 26.

Durch Einstecken eines Steckers 6 in den Kunststoffkörper 5 der Anschlußleiste 1 werden somit die beiden Kabeladern 4 des Fernsprechkabels 26 über die Kontaktfahnen 24 und die Mittelkontakte 11 mit zwei Anschlußelementen 7 verbunden, mit deren Anschlußkontakten 10 jeweils eine Kabelader 2,3 verbunden ist, welche z.B.zu einem Dropwire-Kabel gehören können. Beim Einstecken des Steckers 6 rastet gleichzeitig eine rückwärtige Querrippe 27 in eine Quernut 28 ein, welche an der rückwärtigen Wand einer jeden Aufnahmekammer 15 ausgebildet ist. Wegen der Ausbildung sowohl des Körpers 5 der Anschlußleiste 1 als auch des Steckers 6 aus Kunststoff erfolgt hierbei ein federnder Schnappeffekt. Zum Herausziehen des Steckers 6 aus seiner Aufnahemkammer 15 dient ein in Fig.1 oben dargestelltes hakenartiges Werkzeug 29, welches in den Schlitz 18 der Rückwand der Aufnahmekammer 15 und hinter die Querrippe 27 des Steckers 6 greift.

Auf der Rückseite des Kunststoffkörpers 5 sind jedem Anschlußelement 7 zugeordnete Aufnahmekammern 30 für die Überspannugsableiter 8 vorgesehen. In diesen Aufnahmekammern 30 greifen von unten sowohl die Kontaktfedern 12 der Anschlußelemente 7 als auch die Erdkontaktschiene 14 ein.Die Überspannungsableiter 8 werden von oben in die Aufnahmekammern 30 eingesetzt und klemmend zwischen der Erdkontaktschiene 9 und den Kontaktfedern 12 der Anschlußelemente 7 gehalten.

Eine weitere Ausführungsform des Steckers 6a ist in Fig.2 dargestellt. Dieser unterscheidet sich vom Stecker 6 gemäß Fig. 1 dadurch, daß anstelle von Schraubklemmen 45 die Kabelanschlußelemente 31 aus Schneid-/Klemm-Kontakten 44 bestehen, die einstückig mit den nach unten aus denStecker 6 herausragenden Kontaktfahnen 24a ausgebildet sind. In beiden, durch den T-förmigen Steg 19 gebildeten oberen Freiräumen des Steckers 6a sind Mulden 32 zum Einlegen der Kabeladern 4 ausgeformt, in welchen Mulden unter 45° zur Muldenlängsachse die Schneid-/Klemm-Kontakte 44 eingesetzt sind. Am vorderen Muldenende sind Klemmstege 33 zum Einklemmen der Isolierungs-Hülle der Kabeladern 4 ausgebildet.

Mittels eines Filmscharnieres 34 ist jeweils ein Gehäusedeckel 35 angesetzt, der in seiner Schließstellung mittels Rasten 36 und Gegenrasten 37 am Körper des Steckers 6a festlegbar ist. Der Gehäusedeckel 35 weist einen Schlitz 38 auf, in welchem eine Gegenmulde 39 ausgebildet ist, welche beim Schließen des Gehäusedeckels 35 zusammen mit der Mulde 32 eine rohrförmige Führung und Halterung für die Kabelader 4 bildet. Ferner ist im Schlitz 38 ein Eindrucksteg 40 aus Metall oder Kunststoff eingelassen, der unter 45° zur Längsachse des Schlitzes 38 derart ausgebildet ist, daß der Eindrücksteg 40 beim Schließen des Deckels 35 in den Schlitz des ebenfalls unter 45° in die Mulde 32 eingesetzten Schneid-/Klemm-Kontaktes 44 eingreift, wobei sich der Kontakt 44 und der Eindrücksteg 40 kreuzen. Auf diese Weise wird beim Schließen des Deckels 35 die Kabelader 4 automatisch in den Schneid-/Klemm-Kontakt 44 eingedrückt, so daß ein elektrischer Kontakt von der Kabelader 4 zur Kontaktfahne 24 hergestellt ist. Auch der Stecker 6a weist auf seiner Rückseite eine Querrippe 27 auf.

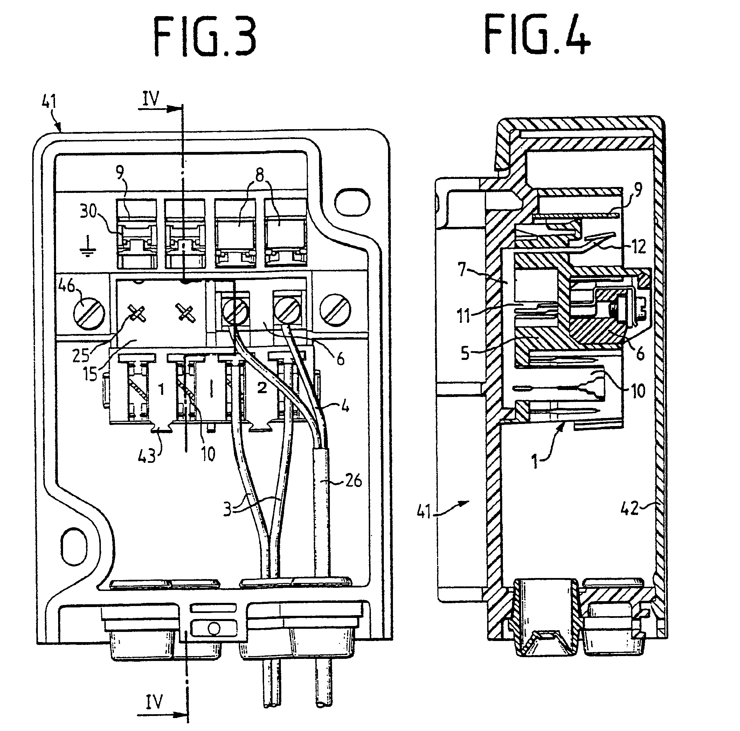

Die Fig. 3 zeigt die Anordnung einer Anschlußleiste 1 innerhalb eines mit einem Deckel 42 verschließbaren Endverzweigers 41.

In Fig.3 ist rechtsseitig in die Aufnahmeöffnung 15 der Anschlußleiste 1 ein Stecker 6 eingesetzt, an denen die Kabeladern 4 eines Fernsprechkabels 26 angeschlossen sind. Ferner sind zwei Kabeladern 3 mit den unter 45° stehenden Anschlußkontakten 10 der zugehörigen Anschlußelemente 7 klemmend verbunden. Schließlich sind in die entsprechenden Aufnahmekammern 30 zwei Überspannungsableiter 8 eingesetzt. Die Erdschiene 9 ist hierbei mit einem Erdanschluß 46 verbunden.

An der vorderen Stirnfläche der Anschlußleiste 1 sind Führungen 43 zur Aufnahme entsprechend ausgebildeter Führungen (nicht dargestellt)des Steckers 6,6a vorgesehen. Im herausgezogenen Zustand des Steckers 6,6a wird der Stecker 6, 6a auf diese Führungen 43 aufgesteckt und nimmt somit eine definierte Lage im Endverzweiger 41 ein.

Linksseitig ist noch keine Montage eines Steckers 6,6a, der Kabeladern 2,3,4 und der Überspannungsableiter 8 erfolgt.In der Schnittdarstellung in Fig. 4 sind der in den Kunststoffkörper 5 der Anschlußleiste 1 eingebaute. Anschlußkontakt 10 und Mittelkontakt 11 sowie die Kontakfeder 12 eines Anschlußelementes 7 und die Erdschiene 9 gut zu erkennen.

Bezugszeichenliste

| | |
|---|---|
| 1 | Anschlußleiste |
| 2,3,4 | Kabelader |
| 5 | Kunststoffkörper |
| 6,6a | Stecker |
| 7 | Anschlußelement |
| 8 | Überspannungsableiter |
| 9 | Erdkontaktschiene |
| 10 | Anschlußkontakt |
| 11 | Mittelkontakt |
| 12 | Kontaktfedern |
| 13 | Aufnahmeöffnung |
| 14 | Klemmschlitz |
| 15 | Aufnahmekammer |
| 16 | Rippen |
| 17 | Trennwände |
| 18 | Schlitze |
| 19 | Stege |
| 20 | Kabelanschlußelement |
| 21,22 | Metallplättchen |
| 23 | Gewindeschraube |
| 24,24a | Kontaktfahne |
| 25 | Kreuz-Gabelöffnung |
| 26 | Fernsprechkabel |
| 27 | Querrippe |
| 28 | Quernut |
| 29 | Werkzeug |
| 30 | Aufnahmekammern |
| 31 | Kabelanschlußelement |
| 32 | Mulden |
| 33 | Klemmstege |
| 34 | Filmscharnier |
| 35 | Gehäusedeckel |
| 36 | Rasten |
| 37 | Gegenrasten |
| 38 | Schlitz |
| 39 | Gegenmulde |
| 40 | Eindrücksteg |
| 41 | Endverzweiger |
| 42 | Deckel |
| 43 | Führungen |
| 44 | Schneid-/Klemmkontakt |
| 45 | Schraubklemmen |
| 46 | Erdanschluß |

**Patentansprüche**

1. Anschlußleiste (1) für Kabeladern von Fernsprechkabeln,insbesondere für dicke Dropwire-Kabeladern (2,3) und dünnere Kabeladern (4), aus einem Kunststoffkörper (5) und aus mehreren jeweils einen Anschlußkontakt (10), zum Anschließen einer Kabelader (2,3), insbesondere einer Dropwire-Kabelader, und einem Mittelkontakt (11), aufweisenden elektrischen Anschlußelementen (7),
**dadurch gekennzeichnet,**

daß für jedes Anschlußelement (7) ein Stecker (6,6a) mit einer Kontaktfahne (24,24a) zum Einstecken in den Mittelkontakt (11) des Anschlußelementes (7) vorgesehen ist und daß der Stecker (6,6a) ein Kabelanschlußelement (20,31) zum Anschließen der anderen Kabelader (4) aufweist.

2. Anschlußleiste nach Anspruch 1,
**dadurch gekennzeichnet,**
daß der Kunststoffkörper (5) im Bereich des Mittelkontaktes (11) eines jedes Anschlußelementes (7) eine Aufnahmekammer (15) für den Stecker (6,6a) aufweist.

3. Anschlußleiste nach Anspruch 2,
**dadurch gekennzeichnet,**
daß jeder Stecker (6,6a) zwei Kabel-Anschlußelemente (20,31) mit je einer Kontaktfahne (24,24a) aufweist.

4. Anschlußleiste nach Anspruch 1,
**dadurch gekennzeichnet,**
daß der Kunststoffkörper (5) einen in Längsrichtung verlaufenden Aufnahmekanal für eine, mehrere Kabelanschlußelemente aufweisende Steckerleiste aufweist.

5. Anschlußleiste nach einem der Ansprüche 1 bis 4,
**dadurch gekennzeichnet,**
daß in jeder Aufnahmekammer (15) bzw. im Aufnahmekanal in Einsteckrichtung der Stecker (6,6a) bzw. der Steckerleiste verlaufende Rippen (16) und in der zugehörigen Wandung des Steckers (6,6a) bzw. der Steckerleiste angepaßte Nuten angeordnet sind.

6. Anschlußleiste nach einem der Ansprüche 1 bis 5,
**dadurch gekennzeichnet,**
daß im Boden einer jeden Aufnahmekammer (15) bzw. des Aufnahmekanals Kreuz-Gabelöffnungen (25) für die Kontaktfahnen (24,24a) der Stecker (6,6a) bzw. der Steckerleiste ausgebildet sind.

7. Anschlußleiste nach einem der Ansprüche 1 bis 6,
**dadurch gekennzeichnet,**
daß das Kabelanschlußelement (20) des Steckers (6) als Schraubklemme (45) ausgebildet ist, deren eines Metallplättchen (22) mit der aus dem Stecker (6) herausragenden Kontaktfahne (24) versehen ist.

8. Anschlußleiste nach einem der Ansprüche 1 bis 6,
**dadurch gekennzeichnet,**
daß das Kabelanschlußelement (31) des Steckers (6a) ein Schneid-/Klemm-Kontakt (44) ist, welcher einstückig mit der aus dem Stecker (6a) herausragenden Kontaktfahne (24a) ausgebildet ist.

9. Anschlußleiste nach Anspruch 8,
**dadurch gekennzeichnet,**
daß der Stecker (6a) einen Gehäusedeckel (35) aufweist, der über ein Filmscharnier (34) mit dem Körper des Steckers (6a) verbunden ist, und daß der Deckel (35) einen Eindrücksteg (40) zum Eindrücken der Kabelader (4) in das Schneid-/Klemm-Kontaktelement (44) aufweist.

10. Anschlußleiste nach Anspruch 9,
**dadurch gekennzeichnet,**
daß der Gehäusedeckel (35) des Steckers (6a) Rasten (36) aufweist, die beim Schließen des Gehäusedeckels (35) mit entsprechenden Gegenrasten (37) des Körpers des Steckers (6a) verrasten.

11. Anschlußleiste nach einem der Ansprüche 1 bis 10,
**dadurch gekennzeichnet,**
daß der Stecker (6,6a) als Prüfstecker ausgebildet ist, wobei die angeschlossenen Kabeladern (4) eine Prüfschnur bilden.

12. Anschlußleiste nach einem der Ansprüche 1 bis 11,
**dadurch gekennzeichnet,**
daß an der vorderen Stirnfläche der Anschlußleiste (1) Führungen (43) zur Aufnahme entsprechend ausgebildeter Führungen des Steckers (6,6a) vorgesehen sind.

13. Anschlußleiste nach einem der Ansprüche 1 bis 12,
**dadurch gekennzeichnet,**
daß im Kunstoffkörper (5) Aufnahmekammern (30) für Überspannungsableiter (8) ausgebildet sind, in welche Aufnahmekammern (30) Kontaktfedern (12) der Anschlußelemente (7) und eine Erdkontaktschiene (9) ragen.

## Claims

1. A connection block (1) for cable cores of telephone cables, in particular thick dropwire cable cores (2, 3) and thinner cable cores (4), comprising a plastic body (5) and several electrical connecting elements (7)

6

including each a connecting contact (10) for connecting a cable core (2, 3), in particular a dropwire cable core, and a central contact (11),

characterized by that, for each connecting element (7), a plug connector (6, 6a) with a contact lug (24, 24a) to be inserted into the central contact (11) of the connecting element (7) is provided, and that the plug connector (6, 6a) includes a cable connecting element (20, 31) to connect the other cable core (4).

2. A connection block according to claim 1,
characterized by that the plastic body (5) comprises, in the area of the central contact (11) of each connecting element (7), a receiving chamber (15) for the plug connector (6, 6a).

3. A connection block according to claim 2,
characterized by that each plug connector (6, 6a) comprises two cable connecting elements (20, 31) with one contact lug (24, 24a) each.

4. A connection block according to claims 1,
characterized by that the plastic body (5) comprises a receiving channel extending in longitudinal direction for a connector bank including several cable connecting elements.

5. A connection block according to one of claims 1 to 4,
characterized by that in each receiving chamber (15) or in the receiving channel, resp., ribs (16) extending in insertion direction of the plug connectors (6, 6a) or of the connector bank, resp., and in the respective wall of the plug connector (6, 6a) or of the connector bank, resp., suitable grooves are provided.

6. A connection block according to one of claims 1 to 5,
characterized by that in the bottom of each receiving chamber (15) or of the receiving channel, resp., cross-fork openings (25) for the contact lugs (24, 24a) of the plug connectors (6, 6a) or of the connector bank, resp., are provided.

7. A connection block according to one of claims 1 to 6,
characterized by that the cable connecting element (20) of the plug connector (6) is adapted as a screw terminal (45), the one metal plate (22) of which being provided with the contact lug (24) projecting from the plug connector (6).

8. A connection block according to one of claims 1 to 6,
characterized by that the cable connecting element (31) of the plug connector (6a) is adapted as an insulation displacement contact (44) being formed as one piece with the contact lug (24a) projecting from the plug connector (6a).

9. A connection block according to claim 8,
characterized by that the plug connector (6a) comprises a housing cover (35), which is connected over a film hinge (34) with the body of the connector (6a), and that the cover (35) comprises a press-in piece (40) for pressing-in the cable core (4) into the insulation displacement contact element (44).

10. A connection block according to claims 9,
characterized by that the housing cover (35) of the plug connector (6a) comprises latches (36), which latch, when closing the housing cover (35) with respective counter latches (37) of the body of the plug connector (6a).

11. A connection block according to one of claims 1 to 10,
characterized by that the plug connector (6, 6a) is a test plug, the connected cable cores (4) forming a test cord.

12. A connection block according to one of claims 1 to 6,
characterized by that at the front face of the connection bank (1), guides (43) for receiving correspondingly shaped guides of the plug connector (6, 6a) are provided.

13. A connection block according to one of claims 1 to 12,
characterized by that in the plastic body (5), receiving chambers (30) for voltage surge arresters (8) are formed, into which receiving chambers (30) project contact springs (12) of the connecting elements (7) and an earth contact rail (9).

## Revendications

1. Réglette de connexion (1) pour fils de câbles téléphoniques, particulièrement fils de câbles dropwire (2, 3) épais et fils de câbles (4) plus minces, comprenant un corps en plastique (5) et plusieurs éléments de raccordement (7) chacun pourvu d'un contact de raccordement (10) pour le raccordement d'un fils de câbles (2, 3), particulièrement d'un fils de câbles dropwire, et d'un contact central (7),
caractérisée en ce que pour chaque élément de raccordement (7), un connecteur (6, 6a) avec une lame de contact (24, 24a) pour l'introduction dans le contact central (11) de l'élément de raccordement (7) est prévu, et que le connecteur (6, 6a) comporte un élément de raccordement de câbles (20, 31) pour le raccordement de l'autre fils de câbles (4).

2. Réglette de connexion selon la revendication 1,
caractérisée en ce que le corps en plastique (5) comporte, dans la région du contact central (11) de chaque élément de raccordement (7), une chambre de réception (15) pour le connecteur (6, 6a).

3. Réglette de connexion selon la revendication 2,
caractérisée en ce que chaque connecteur (6, 6a) est pourvu de deux éléments de raccordement de câbles (20, 31) ayant chacun une lame de contact (24, 24a).

4. Réglette de connexion selon la revendication 1,
caractérisée en ce que le corps en plastique (5) est pourvu d'un canal de réception s'étendant longitudinalement pour une réglette de connecteurs comportant plusieurs éléments de raccordement de câbles.

5. Réglette de connexion selon une des revendications 1 à 4,
caractérisée en ce que dans chaque chambre de réception (15) ou dans le canal de réception, des nervures (16) s'étendant en direction d'introduction du connecteur (6, 6a) ou de la réglette de connecteurs, et dans la paroi associée du connecteur (6, 6a) ou de la réglette de connecteurs, des rainures adaptées sont prévues.

6. Réglette de connexion selon une des revendications 1 à 5,
caractérisée en ce que dans le fond de chaque chambre de réception (15) ou du canal de réception, des ouvertures sous la forme de fourches croisées (25) sont prévues pour les lames de contact (24, 24a) des connecteurs (6, 6a) ou de la réglette de connecteurs.

7. Réglette de connexion selon une des revendications 1 à 6,
caractérisée en ce que l'élément de raccordement de câbles (20) du connecteur (6) est agencé sous la forme d'une borne à vis (45), dont l'une plaque métallique (22) est pourvue de la lame de contact (24) faisant saillie du connecteur (6).

8. Réglette de connexion selon une des revendications 1 à 6,
caractérisée en ce que l'élément de raccordement de câbles (31) du connecteur (6a) est un contact de coupure et de serrage (44), qui est agencé comme une seule pièce avec la lame de contact (24a) faisant saillie du connecteur (6a).

9. Réglette de connexion selon la revendication 8,
caractérisée en ce que le connecteur (6a) comporte un couvercle de boîtier (35), qui est connecté par l'intermédiaire d'une charnière de film (34) avec le corps du connecteur (6a), et que le couvercle (35) comporte une pièce à emmancher (40) pour emmancher le fil de câbles (4) dans le contact de coupure et de serrage (44).

10. Réglette de connexion selon revendication 9,
caractérisée en ce que le couvercle de boîtier (35) du connecteur (6a) comporte des dispositifs d'encliquetage (36), qui s'engagent lors de la fermeture du couvercle de boîtier (35) dans des dispositifs d'encliquetage (37) opposés du corps du connecteur (6a).

11. Réglette de connexion selon une des revendications 1 à 10,
caractérisée en ce que le connecteur (6, 6a) est agencé sous la forme d'un connecteur d'essai, les fils de câbles (4) raccordés formant une corde d'essai.

12. Réglette de connexion selon une des revendications 1 à 11,
caractérisée en ce qu'au front avant de la réglette de connexion (1), des guidages (43) sont prévus pour la réception de guidages adaptés du connecteur (6, 6a).

13. Réglette de connexion selon une des revendications 1 à 12,
caractérisée en ce que dans le corps en plastique (5), des chambres de réception (30) pour des éclateurs déchargeurs (8) sont prévues, dans lesdites chambres de réception (30) s'étendant des ressorts de contact (12) des éléments de raccordement (7) et un rail de terre (9).

# FIG.1

# FIG.2

# FIG.3

# FIG.4